# EUROPEAN PATENT APPLICATION

(11) **EP 3 533 626 A1**
(43) Date of publication of application: **04.09.2019**
(21) Application number: 17863897.9
(22) Date of filing: 08.06.2017
(51) Int. Cl.: B60C 11/16

(54) **STUD PIN AND PNEUMATIC TIRE PROVIDED WITH STUD PIN**

(30) Priority: 26.10.2016 JP 2016209192; 26.10.2016 JP 2016209208
(71) Applicant: TOYO TIRE CORPORATION, Itami-shi, Hyogo 6640847 (JP)
(72) Inventor: SATOI, Aya, Itami-shi Hyogo 664-0847 (JP)
(74) Representative: Eisenführ Speiser
(86) International application number: PCT/JP2017/021230
(87) International publication number: WO 2018/078934

(57) **Abstract**

Provided is a stud pin 1 that includes a body 4 and a shaft 5 protruding the body 4. The shaft 5 has a multi-stepped structure that includes at least a first step 11 protruding from the body 4 and a second step 12 protruding from the first step 11. The outer shape of the first step 11 in a plan view and that of the second step 12 in a plan view are different.

## Description

### TECHNICAL FIELD

The present invention relates to a stud pin, and a pneumatic tire comprising the stud pin.

### BACKGROUND ART

Stud pins for pneumatic tires improve the driving performance (including the drive performance, the braking performance, and the turning performance) of a vehicle, on which pneumatic tires and the stud pins are mounted, on icy and snowy road surfaces by scratching and piercing the icy and snowy road surfaces.

The stud pin disclosed in Patent Literature 1 comprises a head or a body, and a pin or a shaft that protrudes from an end surface of the body. In a plan view, one side of the shaft has a discontinuous outline in which at least one tooth is defined.

### CITATION LIST

### PATENT LITERATURE

Patent Literature 1: WO 2014/122570 A1

### SUMMARY OF INVENTION

### TECHNICAL PROBLEM

By allowing the shaft to have edge components in multiple directions, the driving performance (particularly the turning performance) on icy and snowy road surfaces is further improved. However, in conventional stud pins including the one disclosed in Patent Literature 1, sufficient consideration is not given to imparting a shaft with edge components in multiple directions.

An object of the present invention is to impart a shaft of a stud pin with edge components in more directions.

### SOLUTION TO PROBLEM

One mode of the present invention provides a stud pin that comprises a body and a shaft protruding from the body, wherein the shaft has a multi-stepped structure that comprises at least a first step protruding from the body and a second step protruding from the first step, and a outer shape of the first step in a plan view and that of the second step in a plan view are different.

As a first specific mode, the shaft may further comprise a third step protruding from the second step.

The first step and the second step of the shaft have different outer shapes in a plan view. Therefore, in a plan view, edge components of the first step and edge components of the second step are different in their directions. In other words, the shaft has edge components in multiple directions, and these edge components act in the multiple directions. As a result, the driving performance on icy and snowy road surfaces is improved.

In the first specific mode, a number of the edge components of the second step is preferably less than a number of the edge components of the first step.

The larger the number of the edge components, the shorter is the length of each edge component. By setting the number of the edge components of the first step to be relatively large, the edge components can be ensured in multiple directions while securing the length of each edge component. Further, by setting the number of the edge components of the second step to be relatively small, the edge components can also be ensured in directions different from the directions of the edge components of the first step while securing the length of each edge component.

In the first specific mode, the number of edge components of an endmost step is preferably larger than the number of edge components of a second endmost step.

Generally speaking, the larger the number of the edge components of a step, the higher is the piercing effect of the step on icy and snowy road surfaces. Further, the endmost step has a higher piercing effect on icy and snowy road surfaces as compared to other steps. Therefore, by setting the number of the edge components of the endmost step to be relatively large, the piercing effect of the shaft on icy and snowy road surfaces can be effectively improved.

In the first specific mode, when a total number of the above-described steps of the shaft is an odd number, the number of the edge components of an (N + 1)^{th} step, which is an odd-numbered step, is set to be larger than the number of the edge components of an N^{th} step.

In the first specific mode, when a total number of the above-described steps of the shaft is an even number, the number of the edge components of an (N + 1)^{th} step, which is an even-numbered step, is set to be larger than the number of the edge components of an N^{th} step.

As a second specific mode, the outer shape of the first step in a plan view and that of the second step in a plan view may be dissimilar.

This constitution allows the edges of both first and second protrusions to bite into an icy and snowy road surface in various directions when driving on the icy and snowy road surface with the stud pin being mounted in pin holes of a stud tire. As a result, the edge performance and the driving performance (drive performance, braking performance, and turning performance) on icy and snowy road surfaces can be improved.

In the second specific mode, at least either of the outer shape of the first step in a plan view and the outer shape of the second step in a plan view may be polygonal.

In the second specific mode, the number of the edge components of the first step is preferably less than the number of the edge components of the second step.

In the second specific mode, the protruding dimension of the first step from the body is preferably larger than the protruding dimension of the second step from the first step.

Another mode of the present invention provides a stud tire comprising the above-described stud pin.

### ADVANTAGEOUS EFFECTS OF INVENTION

According to the present invention, a shaft of a stud pin can be imparted with edge components in more directions, whereby the driving performance on icy and snowy road surfaces can be improved.

### BRIEF DESCRIPTION OF DRAWINGS

FIG. 1 is a perspective view illustrating a stud pin according to a first embodiment of the present invention;
FIG. 2 is a plan view illustrating a shaft of the stud pin according to the first embodiment;
FIG. 3 is a partial side view of the stud pin according to the first embodiment, which was taken from the direction of an arrow III of FIG. 1;
FIG. 4 is a developed view of a tread portion of a pneumatic tire on which the stud pins according to the first embodiment are mounted;
FIG. 5A is a plan view illustrating a shaft of a stud pin according to a second embodiment;
FIG. 5B is a partial side view of the stud pin according to the second embodiment, which was taken in the same manner as FIG. 3;
FIG. 6A is a plan view illustrating a shaft of a stud pin according to a third embodiment;
FIG. 6B is a partial side view of the stud pin according to the third embodiment, which was taken in the same manner as FIG. 3;
FIG. 7A is a plan view illustrating a shaft of a stud pin according to a fourth embodiment;
FIG. 7B is a partial side view of the stud pin according to the fourth embodiment, which was taken in the same manner as FIG. 3;
FIG. 8 is a partial perspective view illustrating a stud pin according to Comparative Example;
FIG. 9 is a perspective view illustrating a stud pin according to a fifth embodiment;
FIG. 10 is a front view of the stud pin illustrated in FIG. 1;
FIG. 11 is a plan view of the stud pin illustrated in FIG. 1;
FIG. 12 is a cross-sectional view of one of the pin holes illustrated in FIG. 4;
FIG. 13 is a plan view illustrating a shaft according to Example 2;
FIG. 14 is a plan view illustrating a shaft according to Example 3;
FIG. 15 is a plan view illustrating a shaft according to Example 4;
FIG. 16 is a plan view illustrating a shaft according to Example 5;
FIG. 17 is a plan view illustrating a shaft according to Example 6;
FIG. 18 is a plan view illustrating a shaft according to Example 7;
FIG. 19 is a plan view illustrating a shaft according to Example 8;
FIG. 20 is a plan view illustrating a shaft according to Example 9;
FIG. 21 is a plan view illustrating a shaft according to Comparative Example 1;
FIG. 22 is a plan view illustrating a stud pin according to another embodiment;
FIG. 23 is a plan view illustrating a stud pin according to yet another embodiment;
FIG. 24 is a plan view illustrating a stud pin according to yet another embodiment; and
FIG. 25 is a plan view illustrating a stud pin according to yet another embodiment.

### DESCRIPTION OF EMBODIMENTS

Embodiments of the present invention will now be described referring to the attached drawings.

### (First Embodiment)

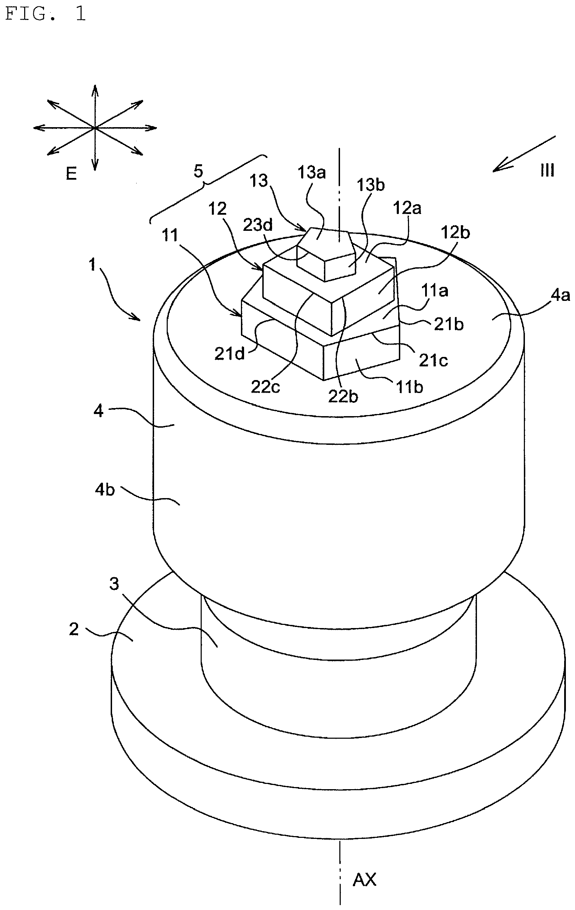

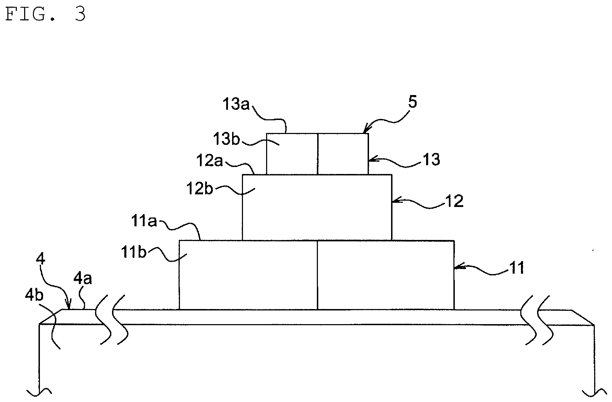

Referring to FIGs. 1 to 3, a stud pin 1 of this embodiment as a whole has a shape that extends along its axis AX. In the following descriptions, the term "plan view" may be hereinafter used for the shape of the stud pin 1 viewed from its tip side along the axis AX.

The stud pin 1 comprises: a base 2 on the bottom-most side; a shank 3 protruding from the base 2; and a body 4 arranged on the tip of the shank 3. The stud pin 1 further comprises a shaft 5 protruding from the body 4.

In this embodiment, the base 2 is substantially disk-shaped, and the body 4 is substantially cylindrical. The shank 3 has a substantially short cylindrical shape having a smaller diameter than the base 2 and the body 4. Further, the base 2, the shank 3 and the body 4 constitute an integrated structure and are made of aluminum or an aluminum alloy. Other structures and other materials can be employed for all of the base 2, the shank 3 and the body 4.

The body 4 comprises an end surface 4a and a side surface 4b. In this embodiment, the end surface 4a is substantially a flat surface that extends perpendicular to the axis AX. The end surface 4a may be inclined with respect to the axis AX and may be a non-flat surface. The shaft 5 protrudes from the end surface 4a of the body 4 in the direction along the axis AX. The outline or outer shape of the shaft 5 in a plan view fits inside a region bounded by the outer shape of the end surface 4a of the body 4 in the plan view. In other words, the area of the outer shape of the shaft 5 in a plan view is smaller than the area of the outer shape of the end surface 4a of the body 4 in the plan view. For example, the area of the former can be set at 10 to 45% of the area of the latter.

In this embodiment, the material of the shaft 5 is tungsten. The shaft 5 is a separate component from the base 2, the shank 3 and the body 4, and is engaged and thereby fixed with the body 4. As for the shaft 5, other material can be employed. The shaft 5 and the body 4 may have an integrated structure as well.

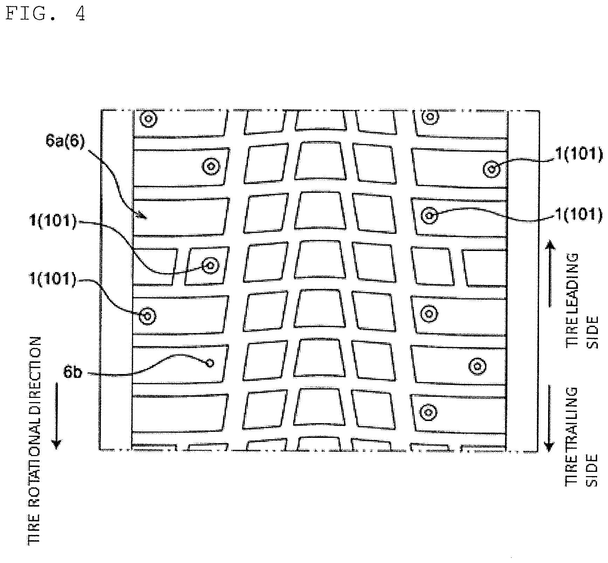

Referring to FIG. 4 in combination, the stud pin 1 is used by being mounted into pin holes 6b that are formed on a tread portion 6a of a pneumatic tire (stud tire) 6. The base 2 and the shank 3 are entirely housed in each pin hole 6b. The body 4 is housed in each pin hole 6b with its end surface 4a and the shaft 5 being exposed on the tread portion 6.

The shaft 5 has a multi-stepped structure comprising plural steps. In this embodiment, the shaft 5 comprises three steps, namely a first step 11, a second step 12 and a third step 13. The first to the third steps 11, 12 and 13 of the shaft 5 comprise end surfaces 11a, 12a and 13a, and side surfaces 11b, 12b and 13b, respectively. The step on the bottom-most side, namely the first step 11, protrudes from the end surface 4a of the body 4. Further, the intermediate step, namely the second step 12, protrudes from the end surface 11a of the first step 11. Still further, the endmost step, namely the third step 13, protrudes from the end surface 12a of the second step 12. The shaft 5 may have four or more steps.

The total height of the shaft 5 (in this embodiment, the height from the end surface 4a of the body 4 to the end surface 13a of the third step 13) can be set at, for example, 0.5 mm to 3 mm. In addition, the ratio of a sum of the heights of the steps other than the first step 11 (in this embodiment, a sum of the heights of the second and the third steps 12 and 13) with respect to the total height of the shaft can be set at, for example, 10% to 90%.

In the first to the third steps 11, 12 and 13 of the shaft 5, the end surfaces 11a, 12a and 13a in a plan view have larger outer shapes toward the side of the body 4, namely the base-end side. Conversely, in the first to the third steps 11, 12 and 13 of the shaft 5, the end surfaces 11a, 12a and 13a in a plan view have smaller outer shapes toward the tip side. Accordingly, the shaft 5 as a whole constitutes a pointed protrusion that protrudes in a stepped manner from the end surface 4a of the body 4.

In this embodiment, the end surfaces 11a, 11b and 11c of the first to the third steps 11, 12 and 13 are substantially flat surfaces that extend perpendicular to the axis AX. The end surfaces 11a, 11b and 11c may be inclined with respect to the axis AX and may be non-flat surfaces.

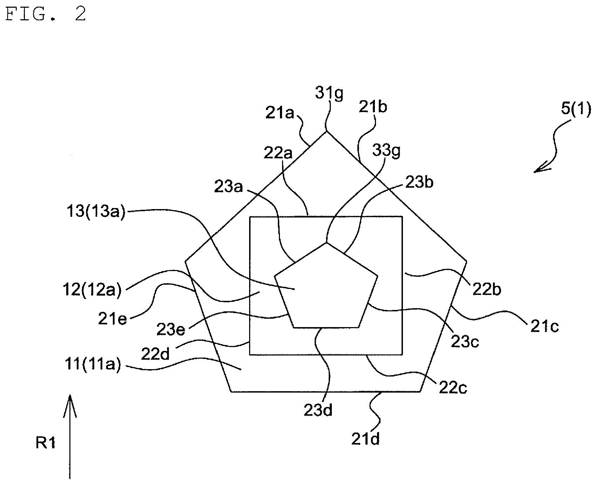

As most clearly illustrated in FIG. 2, the outer shapes of the end surfaces 11a, 12a and 13a of the first to the third steps 11, 12 and 13 in a plan view are pentagonal, quadrangular and pentagonal, respectively. In the first step 11 whose end surface 11a is pentagonal, five sides and edge components 21a, 21b, 21c, 21d and 21e are formed by the end surface 11a and the side surface 11b. Further, in the second step 12 whose end surface 12a is quadrangular, four sides and edge components 22a, 22b, 22c and 22d are formed by the end surface 12a and the side surface 12b. Moreover, in the third step 13 whose end surface 13a is pentagonal, five sides and edge components 23a, 23b, 23c, 23d and 23e are formed by the end surface 13a and the side surface 13b. In this embodiment, the edge components 21a to 21e, 22a to 22d and 23a to 23e are linear. However, these edge components 21a to 21e, 22a to 22d and 23a to 23e are not required to be linear in a geometrically strict sense and may be curved or tortuous to a certain extent as long as a scratching effect on icy and snowy road surfaces is attained. In addition, these edge components 21a to 21e, 22a to 22d and 23a to 23e may be chamfered as long as a scratching effect on icy and snowy road surfaces is attained.

As described above, the end surface 11a of the first step 11 has a pentagonal planar shape, and the end surface 12a of the second step 12 has a quadrangular planar shape. In other words, the first step 11 and the second step 12 of the shaft 5 are different in terms of the outer shapes of their end surfaces 11a and 12a in a plan view. Accordingly, the edge components 21a to 21d of the first step 11 and the edge components 22a to 22d of the second step 12 have different orientations in a plan view. More specifically, in a plan view, none of the edge components 22a to 22d of the second step 12 is parallel to any of the edge components 21a to 21e of the first step 11. In other words, as conceptually illustrated with a symbol E in FIG. 1, the shaft 5 has edge components oriented in multiple directions, and these edge components act in the multiple directions. As a result, the driving performance on icy and snowy road surfaces is improved.

The first step 11 has five edge components 21a to 21e, and the second step 12 has four edge components 22a to 22d. In addition, the end surface 12a of the second step 12 is smaller than the end surface 11a of the first step 11. Generally speaking, when the end surfaces of steps have the same size, the larger the number of edge components, the shorter is the lengths of the individual edge components. Accordingly, by setting the number of the edge components of the first step 11 having the relatively large end surface 11a to be relatively large, the edge components 21a to 21e can be ensured in multiple directions while securing the lengths of the individual edge components 21a to 21e. Moreover, by setting the number of the edge components of the second step 12 having the relatively small end surface 12a to be relatively small, the edge components 22a to 22d can be ensured in directions different from the directions of the edge components 21a to 21e of the first step 11 while securing the lengths of the individual edge components 22a to 22d. As a result, the driving performance on icy and snowy road surfaces is further improved as compared to a case where the outer shape of the end surface 11a of the first step 11 and that of the end surface 12a of the second step 12 are simply different.

As described above, the end surface 13a of the third step 13, which is the endmost step, is pentagonal and has five edge components 23a to 23e. Further, the end surface 12a of the second step 12, which is the second endmost step, is quadrangular and has four edge components 22a to 22d. In other words, the number of the edge components 23a to 23e of the third step 13, which is the endmost step, is larger than the number of the edge components 22a to 22d of the second step 12, which is the second endmost step.

With regard to the first to the third steps 11 to 13, each step exerts a higher piercing effect on icy and snowy road surfaces as the number of the edge components is increases. Moreover, the third step 13, which is the endmost step, exerts a higher piercing effect on icy and snowy road surfaces as compared to the first and the second steps 11 and 12. Therefore, by setting the number of the edge components of the third step 13, which is the endmost step, to be larger than the number of the edge components of the second step 12, the piercing effect of the shaft 5 on icy and snowy road surfaces can be effectively improved, and the driving performance on icy and snowy road surfaces can thereby be improved.

Generally speaking, when the total number of steps of a shaft is an odd number, by setting the number of edge components of an (N + 1)^{th} step (wherein, N is a natural number), which is an odd-numbered step, to be larger than the number of edge components of an N^{th} step, the endmost step is allowed to have a larger number of edge components than the second endmost step. Similarly, when the total number of steps of a shaft is an even number, by setting the number of edge components of an (N + 1)^{th} step (wherein, N is a natural number), which is an even-numbered step, to be larger than the number of edge components of an N^{th} step, the endmost step is allowed to have a larger number of edge components than the second endmost step.

When the stud pin 1 is mounted on the tread portion 6a such that the rotational direction of the pneumatic tire 6 is oriented in the direction indicated by an arrow R1 of FIG. 2 with respect to the shape of the shaft 5 in a plan view, a pointed part 31g, which is formed at the junction of the edge components 21a and 21b of the first step 11, and a pointed part 33g, which is formed at the junction of the edge components 23a and 23b of the third step 13, are positioned on the leading side. Therefore, the piercing effect of these pointed parts 31g and 33g on icy and snowy road surfaces effectively contributes to an improvement of the drive torque. Further, in this case, the edge component 21d of the first step 11 and the edge component 22c of the second step 12 are positioned on the trailing side. Therefore, the scratching effect of these edge components 21d and 22c on icy and snowy road surfaces effectively contributes to an improvement of the braking force.

With regard to the second to the fourth embodiments described below, structures and functions that are not particularly mentioned are the same as in the first embodiment. Further, in the drawings relating to these embodiments, the same symbols are assigned to those elements that are identical or similar to the corresponding elements of the first embodiment.

### (Second Embodiment)

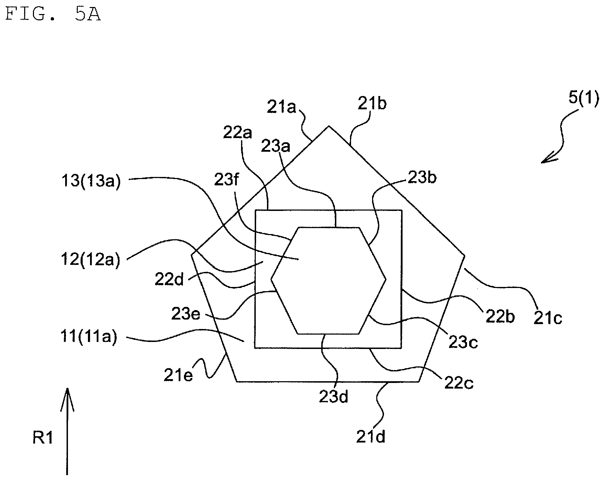

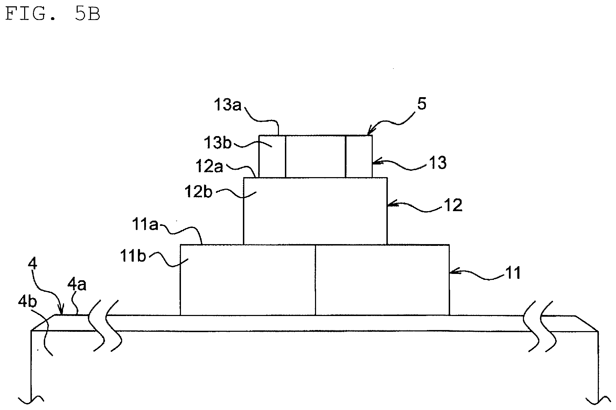

In the stud pin 1 according to the second embodiment that is illustrated in FIGs. 5A and 5B, the outer shapes of the end surfaces 11a to 11c of the first to the third steps 11 to 13 in a plan view are pentagonal, quadrangular and hexagonal, respectively. The first step 11 comprises five edge components 21a to 21e, and the second step 12 comprises four edge components 22a to 22d. Further, the third step 13 comprises six edge components 23a to 23f.

The first step 11 and the second step 12 have different outer shapes in a plan view, and the number of the edge components of the second step 12 is four, which is less than the number of the edge components of the first step 11 that is five. Moreover, the number of the edge components of the third step 13, which is the endmost step, is six and thus larger than the number of the edge components of the second step 12, which is the second endmost step, of four.

### (Third Embodiment)

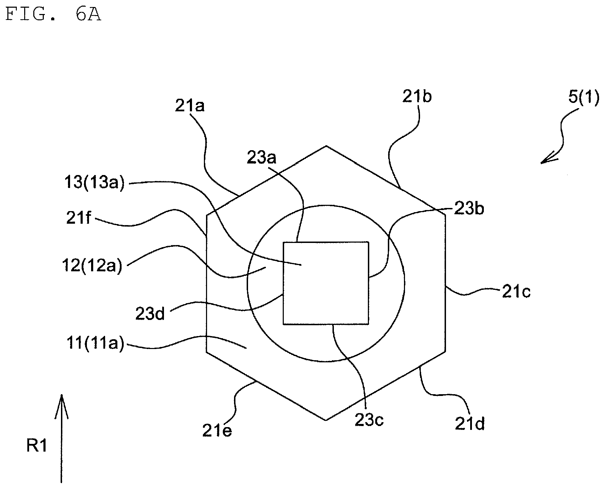

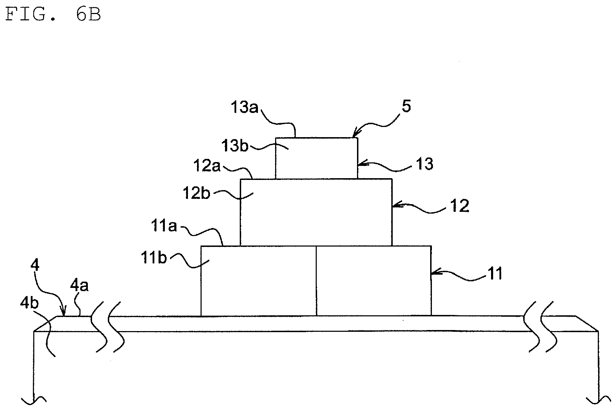

In the stud pin 1 according to the third embodiment that is illustrated in FIGs. 6A and 6B, the outer shapes of the end surfaces 11a to 11c of the first to the third steps 11 to 13 in a plan view are hexagonal, circular and quadrangular, respectively. The first step 11 comprises six edge components 21a to 21f, and the number of the edge components of the second step 12 that is circular can be regarded as infinity. Further, the third step 13 comprises four edge components 23a to 23d.

The outer shape of the first step 11 in a plan view is hexagonal, which is different from the outer shape of the second step 12 in a plan view that is circular.

### (Fourth Embodiment)

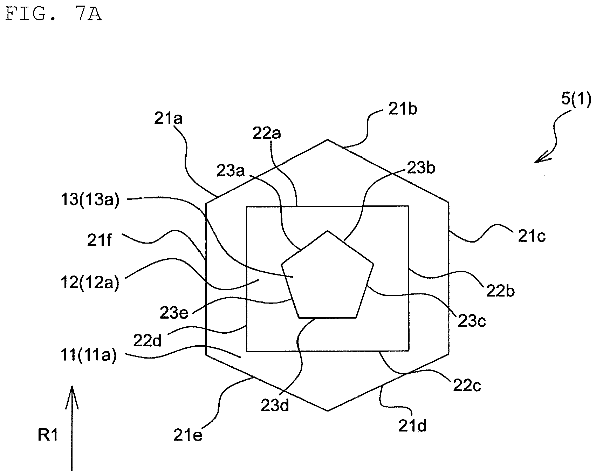

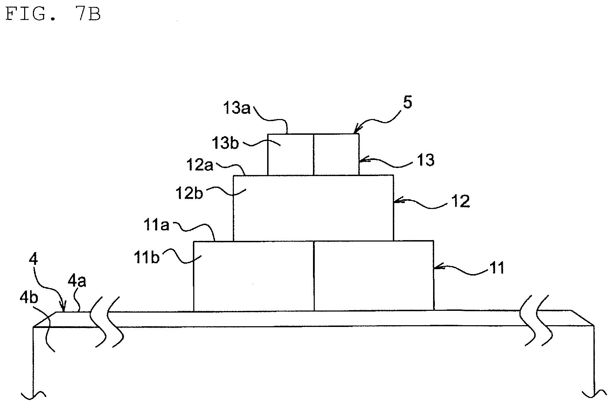

In the stud pin 1 according to the fourth embodiment that is illustrated in FIGs. 7A and 7B, the outer shapes of the end surfaces 11a to 11c of the first to the third steps 11 to 13 in a plan view are hexagonal, quadrangular and pentagonal, respectively. The first step 11 comprises six edge components 21a to 21f, and the second step 12 comprises four edge components 22a to 22d. Further, the third step 13 comprises five edge components 23a to 23e.

The first step 11 and the second step 12 have different outer shapes in a plan view, and the number of the edge components of the second step 12 is four, which is less than the number of the edge components of the first step 11 that is six. Moreover, the number of the edge components of the third step 13, which is the endmost step, is five and thus larger than the number of the edge components of the second step 12, which is the second endmost step, of four.

### (Evaluation Test 1)

As shown in Table 1 below, the stud pins of Comparative Example and the first to the fourth embodiments (which were all brand new) were tested to evaluate the drive performance, the braking performance and the turning performance.

As test tires, tires having a size of 195/65R15 and an air pressure Fr/Re of 220/220 (kPa) were used. In this evaluation test, the test tires were mounted on a test vehicle (1,500 cc, 4WD mid-size sedan), and this test vehicle was driven on an icy road surface. For the evaluation of the edge performance, the first to the fourth embodiments were each evaluated as an index, taking the edge performance of Comparative Example as 100. The drive performance was evaluated in terms of the time required for the test vehicle to reach 30 m after starting from a stopped state on the icy road surface. The braking performance was evaluated in terms of the braking distance when a braking force was applied by ABS (Antilock Brake System) at a speed of 40 km/h. The turning performance was evaluated in terms of the turning radius when a turn was made at the same speed of 40 km/h.

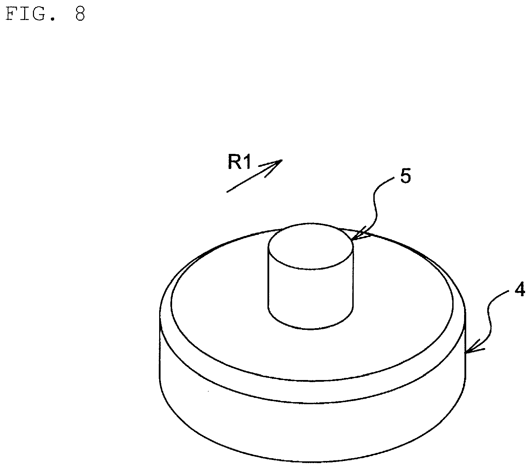

As illustrated in FIG. 8, the stud pin 1 of Comparative Example has a shaft 5 constituted by a single cylinder, not by a multi-stepped structure. For all of Comparative Example and the first to the fourth embodiments, the stud pins 1 were mounted on the test tire such that the tire rotational direction was oriented in the direction indicated by the arrow R1 in the drawings.

**[Table 1]**

| | Comparative Example | First embodiment (FIGs. 2 and 3) | Second embodiment (FIGs. 5A and 5B) |
|---|---|---|---|
| Shaft shape | Cylindrical | First step: pentagonal | First step: pentagonal |
| | | Second step: quadrangular | Second step: quadrangular |
| | | Third step: hexagonal | Third step: hexagonal |
| Drive performance | 100 | 106 | 105 |
| Braking performance | 100 | 108 | 107 |
| Turning performance | 100 | 104 | 106 |
| | Third embodiment (FIGs. 6A and 6B) | Fourth embodiment (FIGs. 7A and 7B) | |
| Shaft shape | First step: hexagonal | First step: hexagonal | |
| | Second step: circular | Second step: quadrangular | |
| | Third step: square | Third step: pentagonal | |
| Drive performance | 105 | 106 | |
| Braking performance | 105 | 106 | |
| Turning performance | 107 | 108 | |

The first to the fourth embodiments, in which the first step 11 and the second step 12 had different outer shapes in a plan view, exerted superior performance than Comparative Example for all of the drive performance, the braking performance and the turning performance.

### (Fifth Embodiment)

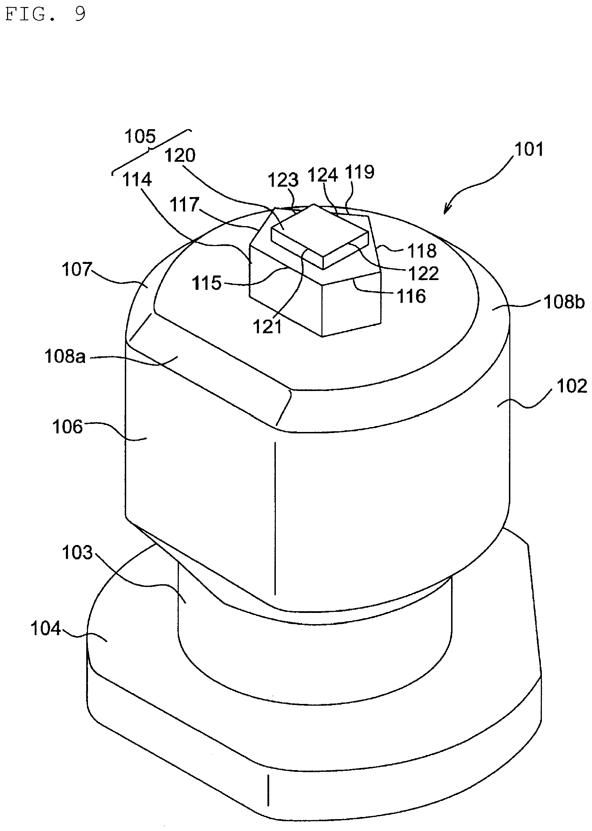

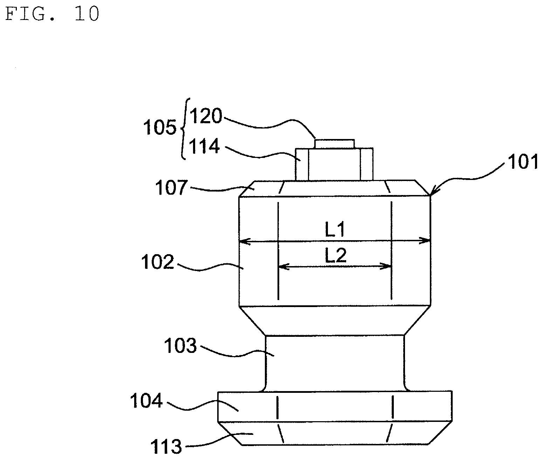

FIGs. 9 and 10 illustrate a stud pin 101 according to the fifth embodiment. The stud pin 101 is formed by, for example, molding aluminum, an aluminum alloy or the like, and the stud pin 101 comprises: a body 102; a shank 103 extending on a lower side of the body 102; a base 104 further extending on a lower side of the shank 103; and a shaft 105 arranged on a center part of the upper surface of the body 102.

The body 102 is substantially cylindrical; however, a side surface 106, which is parallel to the center axis, is formed on a part of the outer circumferential surface. By this, at least on an upper-end periphery of the body 102, a body side edge component 108a which is parallel to a straight line perpendicular to the axis (see the symbol AX in FIG. 1) in a plan view and an arc-shaped part 108b which has a circular arc shape in a plan view are formed.

The upper-surface periphery of the body 102 is constituted by a tapered surface 7. The tapered surface 107 is a region that initially comes into contact with the road surface when a pneumatic tire (stud tire) on which the stud pin 101 is mounted is driven on a road. In this embodiment, the tapered surface 107, which is formed on the body side edge component 108a, is the region that initially collides with the road surface. Accordingly, the tapered surface 107 makes a surface contact when the body side edge component 108a collides with the road surface. It is noted here, however, that the term "tapered surface 107" used herein is construed to encompass a slightly curved surface shape as long as a pointed part thereof can be prevented from colliding with the road surface. Further, the arc-shaped part 108b encompasses not only a circular arc but also a part of a polygonal shape connected by plural line segments. It is noted here that the length of each line segment is shorter than the body side edge component 108a.

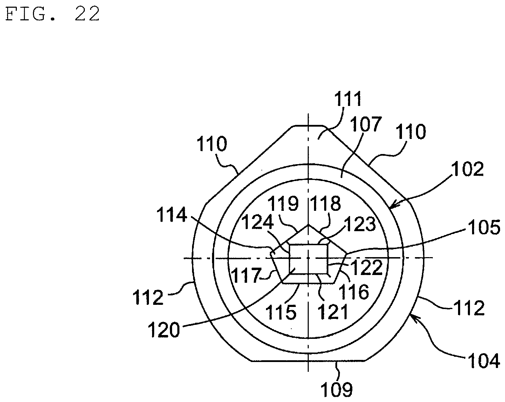

Moreover, in the body 102, a diameter L1 of the cylindrical portion and a length L2 of the body side edge component 108a in a plan view are set such they satisfy a relationship 1/4 < L2/L1 < 3/4. At an L2/L1 value of 1/4 or less, the body 102 has an excessively high partial contact pressure upon contact with the ground, whereas at an L2/L1 value of 3/4 or larger, the body 102 is likely to be damaged upon contact with the ground. It is noted here that, as illustrated in FIG. 22, the body 102 may have a cylindrical shape, namely a circular shape without the body side edge component 108a in a plan view.

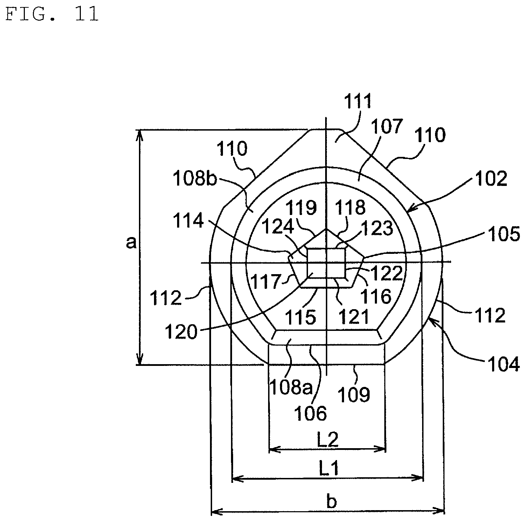

As illustrated in FIG. 11, the base 104 is formed in a longitudinally elongated shape whose maximum length "a" in the longitudinal direction and maximum length "b" in the transverse direction satisfy a > b in a plan view. On one end of the longitudinal direction of the base 104, a linear part 109 parallel to the side surface 106 of the body 102 is formed. Further, in the base 104, a protruding part 111, which comprises two inclined parts 110 on the opposite side of the linear part 109 and protrudes in a triangular shape, is formed. In this embodiment, the protruding part 111 in the drawing is bilaterally symmetrical about a longitudinal center line. In addition, an angle formed by each inclined part 110 with the longitudinal center line is set to be smaller than 90°. This angle is particularly preferably 45°. The base 104 comprises two arc-shaped parts 112 which connect the linear part 109 and the respective inclined parts 110. Moreover, the linear part 109, the inclined parts 110 and the arc-shaped parts 112 are connected such that no edge component is formed. On the lower surface of the outer periphery of the base 104, a tapered surface 113 is formed.

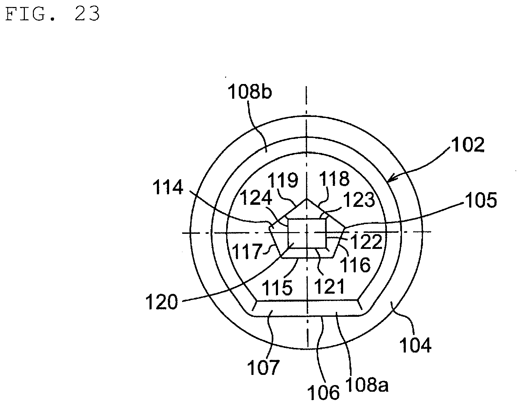

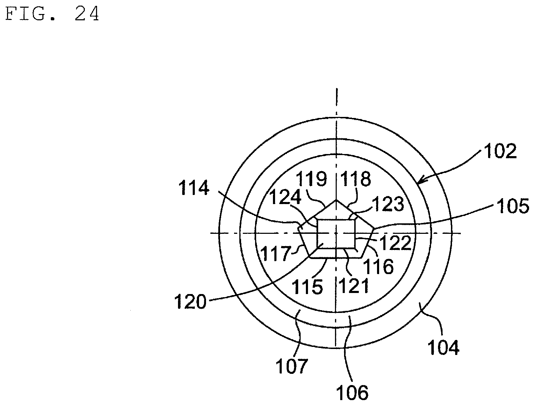

The shape of the base 104 is not restricted to the one illustrated in FIG. 11, and the base 104 may take various forms such as a circular shape and a polygonal shape, as long as the base 104 extends to the outer side than the body 102 in a plan view. FIG. 23 illustrates an example in which the base 104 is circular in a plan view. As illustrated in FIG. 24, the body 102 can also be circular in a plan view to make both the base 104 and the body 102 circular in a plan view. However, as described above, by forming the base 104 in a heterogeneous shape, dislodgement of the stud pin 101 from the pin holes 6b (see FIG. 4) during driving on a road can be effectively inhibited in a state where an increase in weight is suppressed and the stud pin 101 is mounted on a tire.

The shaft 105 comprises a first step 114 which has an odd-numbered polygonal shape in a plan view (a pentagonal shape in this embodiment). A first edge component 115, which includes one side (edge component) of the first step 114, extends in parallel to the side surface 6 of the body 102 in a plan view. The length of the first edge component 115 is set to be shorter than the length of the body side edge component 108a. A second edge component 116 and a third edge component 117, which are adjacent to the first edge component 115 on the respective sides thereof, face the arc-shaped part of the base 104. Further, a fourth edge component 118 adjacent to the second edge component 116 and a fifth edge component 119 adjacent to the third edge component 117 face the respective inclined parts 110 of the base 104.

On the upper surface of the first step 114, a second step 120 is formed. The second step 120 has a rectangular shape in a plan view, and a sixth edge component 21, which is one of the long sides of the rectangular shape, is parallel to the first edge component 115 of the first step 114. It is noted here that, in a plan view, other edge components of the second step 120 (a seventh edge component 122, an eighth edge component 123, and a ninth edge component 124) extend in different directions from the opposing edge components of the first step 114.

The shaft 105 is arranged such that its axis is aligned with the axis of the body 102. By this, a sufficient distance can be ensured between the outer periphery of the body 102 and the shaft 105 in all directions. In addition, the second step 120 has a smaller number of edge components than the first step 114. Specifically, the first step 114 has five edge components, while the second step 120 has four edge components. Moreover, in this embodiment, the height of the shaft 105 is 0.5 mm to 2.5 mm. The reason for this is that the shaft 105 cannot sufficiently exert its functions at a height of less than 0.5 mm, and the shaft 105 contacts the ground before the body 102 and is thus likely to be damaged at a height of greater than 2.5 mm. Furthermore, the height ratio of the second step 120 with respect to the first step 114 is set to be 10% to 80%. The edge effect of the second step 120 is insufficient when the height ratio is lower than 10%, and the first step 114 cannot sufficiently exert an edge effect when the height ratio is higher than 80%.

By configuring the shaft 105 to have two steps in this manner, the total edge length can be increased, so that a sufficient edge effect can be exerted. In addition, since the edge components of the first and the second steps 114 and 120 that extend in various directions collide with the road surface, an edge effect can be exerted not only in a straight direction but also in various directions during cornering and the like. It is noted here that the shaft 105 may be constituted by three or more steps as well.

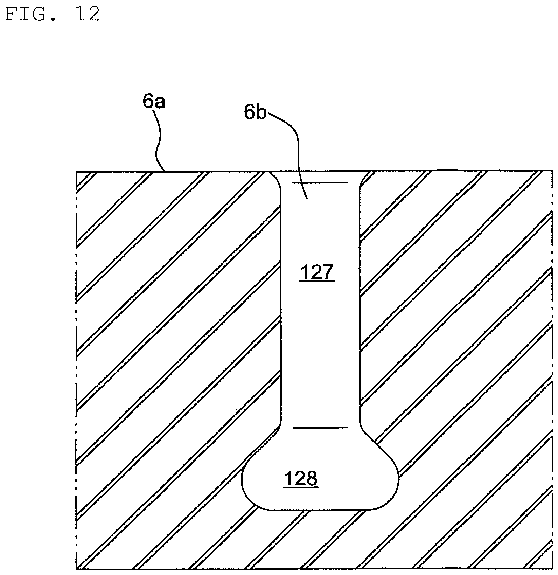

As illustrated in FIG. 4, the stud pin 101 having the above-described constitution is mounted into the pin holes 6b formed on the tread portion 6a of the pneumatic tire 6. As illustrated in FIG. 12, the pin holes 6b are each constituted by a small-diameter part 27 having the same inner diameter and a large-diameter part 28 on the tip thereof. An operation of mounting the stud pin 101 into each pin hole 6b is automatically performed by a pin driving device (not illustrated). In this case, the base 104 has the above-described longitudinally elongated heterogeneous shape, not a point-symmetrical shape such as a circular shape; therefore, the orientation of the stud pin 101 can be easily understood and the stud pin 101 can thus be accurately mounted into each pin hole 6b. In this embodiment, the side surface 106 of the body 102 (the first side surface of the shaft 105) is positioned on the tire trailing side such that it extends in the tire widthwise direction perpendicular to the tire circumferential direction. In this state, a part of the stud pin 101 above the upper end (tapered surface 7) of the body 102 is exposed from the surface of the tread portion 6a.

According to the stud pin 101 mounted on a tire in this manner, during driving, the body side edge component 108a constituting an upper-end part of the body 102 initially collides with the road surface. The body side edge component 108a has sufficient length and area. Therefore, even when the body side edge component 108a collides with the road surface, the impact force applied per unit area of the road surface can be reduced. As a result, problems such as road surface cracking can be avoided even when driving on a dry road surface. Further, when driving on a frozen road surface (icy surface), the body side edge component 108a bites into the road surface to exert an excellent driving force.

The shaft 105 subsequently collides with the road surface. In this case, a sufficient distance is secured between the body 102 and the shaft 105. Therefore, the shaft 105 is prevented from colliding with the road surface before the body 102. As a result, damage to the shaft 105 caused by collision with the road surface can be inhibited.

The shaft 105 that collides with the road surface is constituted by two steps and, in a plan view, the first step 114 and the second step 120 have different directions of pointed vertexes except at one spot. Therefore, the edge effect of the shaft 105 can be sufficiently exerted. In other words, in straight driving, the fourth edge component 118 and the fifth edge component 119 of the first step 114 and the vertex where these edge components intersect with each other, as well as the eighth edge component 123 of the second step 120, act on the road surface (icy surface). Further, when cornering a curve, the second edge component 116 or the third edge component 117 of the first step 114 and the seventh edge component 122 or the ninth edge component 124 of the second step 120 inhibit skidding on the road surface. Moreover, when the brake is applied, the first edge component 115 of the first step 114 and the sixth edge component 21 of the second step 120 apply a braking force against the road surface.

In these processes, a force that causes the stud pin 101 to fall out of the pin hole 26 acts on the stud pin 101 through the body 102 and the shaft 105. The stud pin 101 comprises the shaft 105 having a smaller diameter than the body 102 and the base 104 having a larger diameter than the body 102 connected to the shaft 5, so that dislodgement of the stud pin 101 is effectively inhibited.

### (Evaluation Test 2)

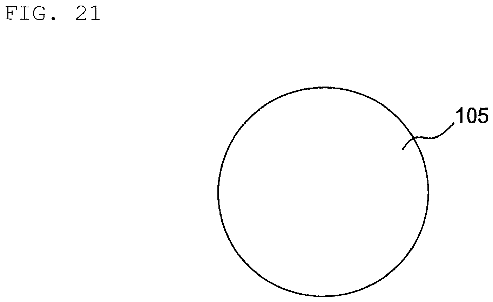

The edge performance was tested for the stud pin of Comparative Example, whose shaft 105 had the plan-view shape illustrated in FIG. 21, as well as the stud pins of Examples 1 to 9 that are illustrated in FIGs. 11 and 13 to 20 (see Table 2). As test tires, tires having a size of 195/65R15 and an air pressure Fr/Re of 220/220 (kPa) were used. In the test, the test tires were mounted on a test vehicle (1,500 cc, 4WD mid-size sedan), and this test vehicle was driven on an icy road surface to evaluate the edge performance (drive performance, braking performance and turning (cornering) performance). For the evaluation of the edge performance, Examples 1 to 9 were each evaluated as an index, taking the edge performance of Comparative Example 1 as 100. The drive performance was evaluated in terms of the elapsed time required for the driving distance to reach 30 m after starting from a stopped state on the icy road surface. The braking performance was evaluated in terms of the braking distance when a braking force was applied by ABS (Antilock Brake System) at a speed of 40 km/h. The turning performance was evaluated in terms of the turning radius when a turn was made at the same speed of 40 km/h.

The shaft 105 protruding from a center part of the upper surface of the cylindrical body 102 had the below-described plan-view shapes. It is noted here that the upper side indicates the traveling direction, namely the tire leading side, in all of the drawings.

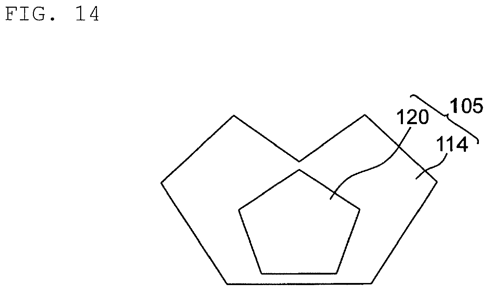

In Comparative Example, the shaft 105 has a circular shape with only one step as illustrated in FIG. 14.

Example 1 is as described in the fifth embodiment illustrated in FIG. 10.

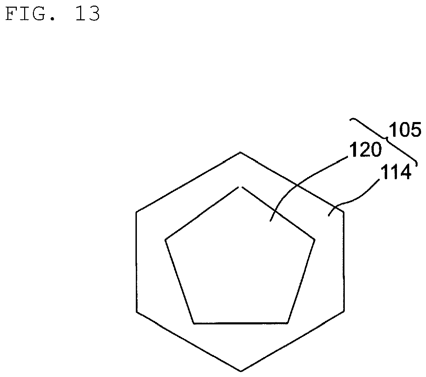

In Example 2, as illustrated in FIG. 13, the first step 114 and the second step 120 are formed in a hexagonal shape and a pentagonal shape, respectively. Their vertexes face each other at one spot.

In Example 3, as illustrated in FIG. 14, the first step 114 and the second step 120 are formed in a heptagonal shape and a pentagonal shape, respectively. The shape of the first step 114 has a depression at one spot. The vertex positioned in the depression faces one of the vertexes of the second step, and the sides positioned on the opposite side thereof are parallel to each other.

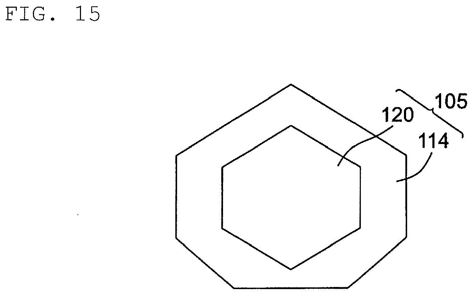

In Example 4, as illustrated in FIG. 15, the first step 114 and the second step 120 are formed in a heptagonal shape and a hexagonal shape, respectively. The six sides of the first step 114 and the sides of the second step 120 are arranged in parallel to each other.

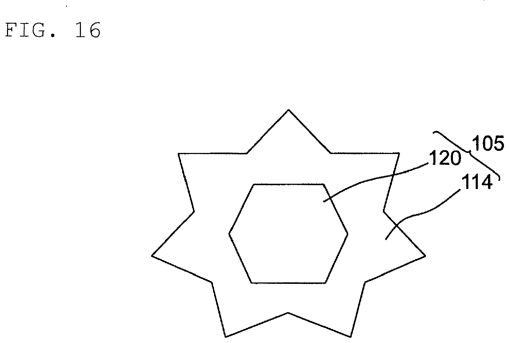

In Example 5, as illustrated in FIG. 16, the first step 114 and the second step 120 are formed in a star shape and a hexagonal shape, respectively.

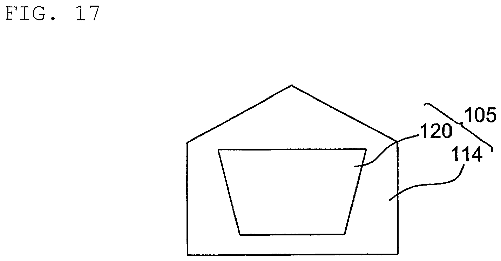

In Example 6, as illustrated in FIG. 17, the first step 114 and the second step 120 are formed in a pentagonal shape and a trapezoidal shape, respectively.

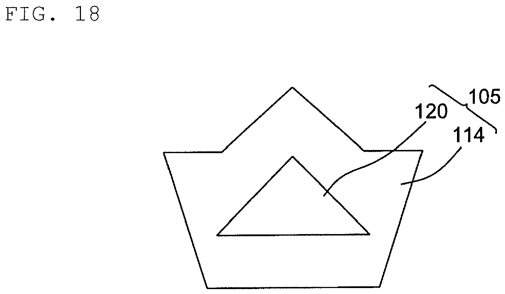

In Example 7, as illustrated in FIG. 18, the first step 114 and the second step 120 are formed in a heptagonal shape and a triangular shape, respectively. In the first step 114, the center part of one side of a trapezoid (the upper side in the drawing) protrudes in a triangular shape, forming a heptagon.

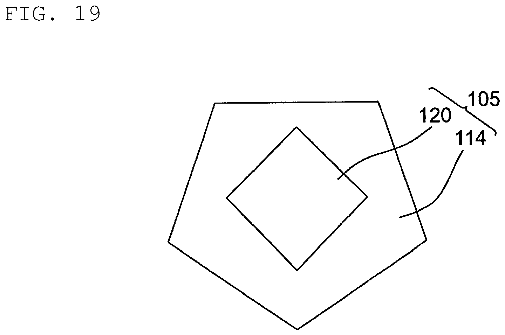

In Example 8, as illustrated in FIG. 19, the first step 114 and the second step 120 are formed in a pentagonal shape and a quadrangular shape, respectively. The second step 120 is arranged such that one of its diagonal lines is aligned with the traveling direction.

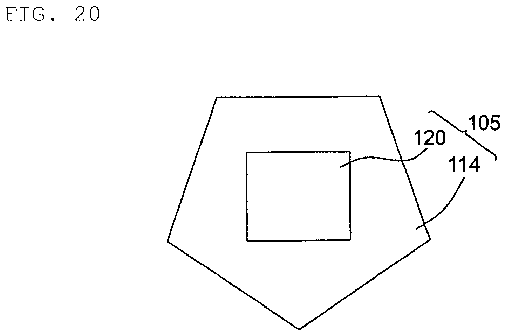

In Example 9, as illustrated in FIG. 20, the first step 114 and the second step 120 are formed in a pentagonal shape and a quadrangular shape, respectively. Example 9 and Example 8 are different in terms of the orientation of the second step 120. In Example 9, two parallel sides of the second step are arranged perpendicular to the traveling direction.

**[Table 2]**

| | Comparative Example | Example 1 | Example 2 |
|---|---|---|---|
| Shaft shape | Circular | First step: pentagonal | First step: hexagonal |
| | | Second step: quadrangular | Second step: pentagonal |
| Drive performance | 100 | 103 | 104 |
| Braking performance | 100 | 105 | 103 |
| Turning performance | 100 | 103 | 105 |
| | Example 3 | Example 4 | Example 5 |
| Shaft cross-sectional shape | First step: heptagonal | First step: heptagonal | First step: star shape |
| | Second step: pentagonal | Second step: hexagonal | Second step: hexagonal |
| Drive performance | 105 | 104 | 104 |
| Braking performance | 104 | 102 | 104 |
| Turning performance | 106 | 105 | 107 |
| | Example 6 | Example 7 | Example 8 |
| Shaft shape | First step: pentagonal | First step: heptagonal | First step: pentagonal |
| | Second step: trapezoidal | Second step: triangular | Second step: quadrangular |
| Drive performance | 103 | 104 | 103 |
| Braking performance | 106 | 106 | 104 |
| Turning performance | 102 | 104 | 104 |
| | Example 9 | | |
| | First step: pentagonal | | |
| Shaft shape | Second step: quadrangular | | |
| Drive performance | 101 | | |
| Braking performance | 105 | | |
| Turning performance | 102 | | |

As shown above, in Examples 1 to 9, excellent effects were exerted by the respective edge components in all of the items of the edge effect. These edge effects were attained because the two-step configuration enabled to freely set the directions of the edge components and to increase the lengths of the edge components.

In the fifth embodiment, the body side edge component 108a was arranged on the tire trailing side such that it extends perpendicular to the tire circumferential direction along the tire widthwise direction; however, the body side edge component 108a may be arranged on the tire leading side as well. This makes it easier for the body side edge component 108a to exert a braking force.

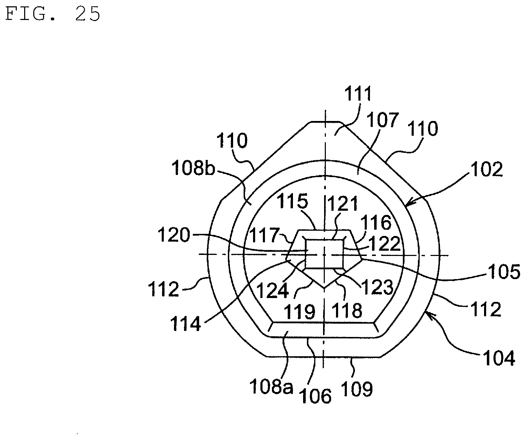

In the fifth embodiment, the body side edge component 108a of the body 102 and the first edge component 115 of the shaft 105 were both arranged on the lower side with respect to a dash-dotted line extending in the lateral direction; however, they can also be arranged on the opposite sides. In FIG. 25, the shaft 105 is rotated by 180° so as to arrange the body side edge component 108a and the first edge component 115 of the shaft 105 on the lower side and the upper side, respectively, with respect to a straight line extending in the lateral direction. In this case, the body side edge component 108a can be arranged on the tire leading side perpendicular to the tire circumferential direction, and the first edge component 115 of the shaft 105 can be arranged on the tire trailing side. According to this constitution, braking performance can be exerted by the body side edge component 108a, and traction performance can be exerted by the first edge component 115 of the shaft 105.

### DESCRIPTION OF SYMBOLS

- 1, 101:: stud pin
- 2:: base
- 3:: shank
- 4:: body
- 4a:: end surface
- 4b:: side surface
- 5:: shaft
- 11:: first step
- 11a:: end surface
- 11b:: side surface
- 12:: second step
- 12a:: end surface
- 12b:: side surface
- 13:: third step
- 13a:: end surface
- 13b:: side surface
- 6:: pneumatic tire
- 6a:: tread portion
- 6b:: pin hole
- 21a, 21b, 21c, 21d, 21e, 21f:: edge component
- 22a, 22b, 22c, 22d, 22e, 22f:: edge component
- 23a, 23b, 23c, 23d, 23e, 23f:: edge component
- 31g, 33g:: pointed part
- 101:: stud pin
- 102:: body
- 103:: shank
- 104:: base
- 105:: shaft
- 106:: side surface
- 107:: tapered surface
- 108a:: body side edge component (edge component)
- 108b:: arc-shaped part
- 109:: linear part
- 110:: inclined part
- 111:: protruding part
- 112:: arc-shaped part
- 113:: tapered surface
- 114:: first step
- 115:: first edge component
- 116:: second edge component
- 117:: third edge component
- 118:: fourth edge component
- 119:: fifth edge component
- 120:: second step
- 121:: sixth edge component
- 122:: seventh edge component
- 123:: eighth edge component
- 124:: ninth edge component
- 125:: tread portion
- 126:: pin hole
- 127:: small-diameter part
- 128:: large-diameter part

## Claims

1. A stud pin comprising:
a body; and
a shaft protruding from the body, wherein
the shaft has a multi-stepped structure that comprises at least a first step protruding from the body and a second step protruding from the first step, and
an outer shape of the first step in a plan view and that of the second step in a plan view are different.

2. The stud pin according to claim 1, wherein the shaft further comprises a third step protruding from the second step.

3. The stud pin according to claim 2, wherein a number of edge components of the second step is less than a number of edge components of the first step.

4. The stud pin according to claim 2 or 3, wherein a number of edge components of an endmost step is larger than a number of edge components of a second endmost step.

5. The stud pin according to any one of claims 2 to 4, wherein
a total number of the steps of the shaft is an odd number, and
the number of the edge components of an (N + 1)^{th} step, which is an odd-numbered step, is larger than the number of the edge components of an N^{th} step.

6. The stud pin according to any one of claims 2 to 4, wherein
a total number of the steps of the shaft is an even number, and
the number of the edge components of an (N + 1)^{th} step, which is an even-numbered step, is larger than the number of the edge components of an N^{th} step.

7. The stud pin according to claim 1, wherein the outer shape of the first step in a plan view and that of the second step in a plan view are dissimilar.

8. The stud pin according to claim 7, wherein at least either of the outer shape of the first step in a plan view and the outer shape of the second step in a plan view is polygonal.

9. The stud pin according to claim 7 or 8, wherein the number of the edge components of the first step is less than the number of the edge components of the second step.

10. The stud pin according to any one of claims 7 to 9, wherein the protruding dimension of the first step from the body is larger than the protruding dimension of the second step from the first step.

11. A stud tire comprising:
the stud pin according to any one of claims 1 to 10; and
pin holes which are formed on a tread portion and in which the stud pin is mounted.

12. A stud tire comprising:
the stud pin according to any one of claims 7 to 10; and
pin holes which are formed on a tread portion and in which the stud pin is mounted,
wherein the stud pin is arranged such that the edge components of the body are perpendicular to the tire circumferential direction on a tire trailing side.

13. A stud tire comprising:
the stud pin according to any one of claims 7 to 10; and
pin holes which are formed on a tread portion and in which the stud pin is mounted,
wherein the stud pin is arranged such that the edge components of the body are perpendicular to the tire circumferential direction on a tire leading side.
